# EUROPEAN PATENT APPLICATION

(11) **EP 1 182 868 A2**
(43) Date of publication of application: **27.02.2002**
(21) Application number: 01305903.5
(22) Date of filing: 09.07.2001
(51) Int. Cl.: H04N 5/00

(54) **Improvements in file servers**

(30) Priority: 04.08.2000 GB 0019046
(71) Applicant: Qauntel Limited, Newbury, Berkshire RG14 2NX (GB)
(72) Inventor: Cawley, Robin Alexander, Newbury, Berkshire RG20 9EN (GB)
(74) Representative: Whitten, George Alan

(57) **Abstract**

A computer server system comprising a plurality of storage units which are arranged to be accessed for data retrieval purposes by a plurality of users, wherein user data is scattered in blocks distributed randomly and repeatedly across available storage.

## Description

This invention relates to computer file server systems and more especially, but not exclusively, it relates to server systems for audio/video data.

It is common for computer file servers to contain multiple storage units such as disk drives, but to present an appearance to a server user, of a single homogeneous block of storage, the file server being arranged to take responsibility for distributing the user's data appropriately across the various disks which it controls. This is done for several reasons. Firstly, to generate a single block of storage whose capacity is greater than that available in a single disk drive; secondly, to increase the performance of the server by using multiple disk drives simultaneously; and thirdly, to allow the server to be tolerant to the failure of a disk drive by the use of a parity disk. A server system of this kind is commonly known as a RAID (Redundant Array of Independent Disks).

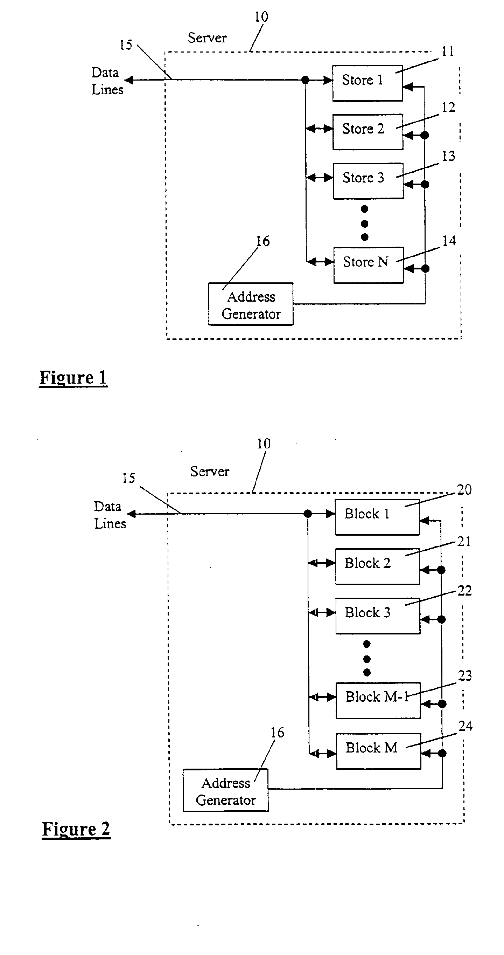

Figure 1 of the accompanying drawings shows, in schematic block diagram form, the main elements of a server 10. The server 10 comprises a number N of stores 11 to 14 connected to receive incoming data and to output outgoing data via data lines 15. Typically, each store 11 to 14 will comprise a separate hard disk storage device, but the server is arranged such that as seen from the outside (i.e. by other devices connected to it), it appears to be a single storage device.

An address generator 16 is arranged to generate addresses identifying individual stores 11 to 14 and specific locations within those stores at which data is stored. As shown in Figure 2, the address generator 16 logically divides the N stores 11 to 14 into M blocks 20 to 24 (where M»N, typically) and data is stored distributed among the blocks 20 to 24.

The manner in which a file server organises user data across a number of storage units available to it is of particular relevance when the server is being used for streaming data such as audio or video data as may be required for broadcast applications. Such streaming server uses differ from more conventional uses of file servers (e.g. for commercial data processing) in two ways. Firstly, it is normal to read and write data in very long contiguous chunks, which may be many megabytes in length. This contrasts with data processing applications, where single records are normally read or written in the middle of a file. Secondly, it is "real time", in that the data flow must never slow down below the rate of 1 frame delivered per frame of elapsed time, because if a frame arrives a millisecond after its due "on air" time, for example, this would constitute an irremediable system failure. This contrasts to a data processing system, where it is acceptable for a record update occasionally to take a few milliseconds longer than usual, especially if this is compensated by other occasions when it takes less time than usual. Thus, it is apparent that a data processing server is concerned with average access time, whereas a streaming server is concerned with worst-case access time.

It is common for file servers to take explicit advantage of what is called diversity. If a server has many users, it is improbable that all of those users will want to access data on the same storage unit at the same time. If different users are involved in different tasks, their accesses will generally be scattered across the various storage units in a way which can be statistically analysed. It is not necessary to provide sufficient bandwidth for every user to access any single storage unit at one moment. The chance of this happening is (calculably) small. When, very occasionally, it does happen, the resultant delay can be accepted. Because of diversity, the likelihood that one such very occasional event will be shortly followed by another similar event is very small indeed.

Diversity, however, does not work for video servers. Hypothesise a video server being used in a news studio when some very newsworthy event occurs and a video clip of the event has been placed upon the server. It is highly likely that a significant number of users will want to view the clip as soon as it has arrived, all at the same time.

If the video clip has been placed upon a single storage unit, then all these users would be attempting to access that single storage unit, which would be overloaded. Furthermore, after the first access, their next access would also be to that same storage unit to retrieve the next block of the clip, so the overload would be repeated. The worst-case throughput of the system would be equal to the throughput of a single storage unit, annihilating one of the major advantages of a multiple storage unit server.

This is, of course, a simplistic model, which is unlikely to be adopted by any real server. A much more common one is to divide the data into blocks and to write consecutive blocks to different storage units. Thus, in a system having N storage units, the first block would be allocated to Unit 1, the second to Unit 2, the Nth to Unit N, the Nth+1 to Unit 1 again, and so on, in rotation. This is sometimes referred to as striping. This can still easily be defeated in a video server, because a single video clip will go round any reasonable number (N) of storage units many times. It then becomes quite likely that users will be accessing the clip exactly N blocks apart, thus repeatedly trying to access the same storage unit - albeit a different one every time.

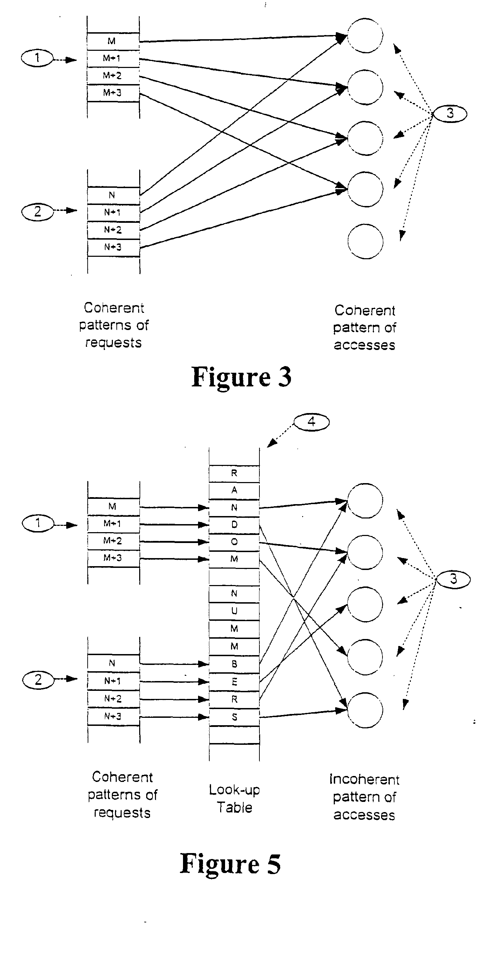

Figure 3 of the accompanying drawings shows two clips 1 and 2. The clips 1, 2 are video clips which are to be played at the same time, each comprising multiple blocks numbered M, M+1, M+2 and N, N+1, N+2, respectively. The blocks are held on multiple storage units 3, organised by the known technique of striping, in which consecutive blocks are distributed across consecutive storage units. In this diagram, it chances that blocks M and N both fall on the same storage unit, so that fetching of block N is delayed while block M is fetched. Because the blocks are striped, block N+1 is held on the same storage unit as block M+1, so the delay is repeated. It will be obvious that for greater numbers of clips, the potential delay rises proportionately.

Experience suggests that whatever coherent algorithm is used for spreading data across the system, some pattern of user accesses will defeat it, and even if that pattern is not obvious at the time the system is configured, it is possible that some operational change at a user site will make the system fail its commitment always to deliver the video as demanded. As already mentioned, although an occasional such deadline missed is acceptable in a data processing system, it would be very unacceptable in a video server system.

It should be noted that the problems described above apply to communications channels as well as to storage units. If a server consists of a number of communications busses, such as Fibre Channel or SCSI, each of which is connected to a number of disk drives, the bus itself can become a bottleneck of the type described above, even if the data is scattered evenly across the disk drives on each bus.

The invention aims to provide a computer server system in which the foregoing problem is obviated, or at least very substantially minimised to an extent such that it may be ignored due to the low statistical probability of a problem arising.

The invention provides a server for storing data of at least one data stream for simultaneous access by a plurality of different users, the server comprising: at least one storage device providing a multiplicity of individually addressable storage locations; an address generator for addressing storage locations in the at least one storage device, the address generator being arranged to generate block addresses which identify logical storage blocks, each comprising multiple storage locations and location addresses which identify individual ones of the storage locations within a logical storage block; and an address randomiser, coupled to receive the block addresses generated by the address generator, for generating from the received block addresses corresponding pseudo-random block addresses which are output together with the location addresses to the at least one storage device for the writing of data of the data stream to and the reading of data of the data stream from the store in pseudo-random block order.

The invention also provides a method for storing data of at least one data stream for simultaneous access by a plurality of different users, the method comprising: providing a multiplicity of individually addressable storage locations in at least one storage device; addressing storage locations in the at least one storage device by generating block addresses which identify logical storage blocks, each comprising multiple storage locations and location addresses which identify individual ones of the storage locations within a logical storage block; generating from the received block addresses corresponding pseudo-random block addresses, outputting the same together with the location addresses to the at least one storage device; and effecting one of writing data of the data stream to the store in pseudo-random block order and reading data of the data stream from the store in pseudo-random block order.

The invention further provides a computer server system comprising a plurality of storage units which are arranged to be accessed for data retrieval purposes by a plurality of users, wherein user data is scattered in blocks distributed randomly and repeatably across available storage.

The randomiser may comprise a look-up table which comprises entries in random order, so that each entry once set up, is always the same and, therefore, repeatable. Thus, it will be appreciated that in a system according to this invention, the system in effect generates diversity which the server users are failing to generate.

Thus, in the case of a video server, it is apparent that whichever clip(s) the users may request of the server, they will not normally access the same storage units more than a few times in a row and the more users there are, the more likely they are to diverge.

The only exception to this is when the users are trying to read the same clip at the same position, in which case they will be following exactly the same pattern of accesses. Since they will want exactly the same data this special case may be specially catered for such that data read for a first user is copied to a second and further users so that a second or subsequent user has no need to access the server in order to re-fetch this data from a storage unit.

Scattering the data randomly across the available storage effectively optimises the worst case at the expense of the best case. It is normally true that storage units such as disks can read adjacent blocks more efficiently than non-contiguous ones. By randomising the data, the possibility for this efficiently to be exploited is removed. This, therefore, is the price paid to ensure that the system cannot be trapped by a worst case. This is an appropriate trade-off for a video server, for which the improved performance in the best case cannot be exploited (a frame cannot be played out until it is needed) and for which the worst possible case is critical to the system performing its function.

A simple implementation of the Repeatable Randomiser is a Look Up Table (LUT). Without the LUT, a server offers H blocks of storage, numbered 0 to H-1 and scattered evenly across the available storage units. The LUT consists of H entries, each containing a number in the range 0 to H-1, but with those numbers randomly scattered. When a user requests access to a block of storage, the logical block number presented by the user is used an index to the LUT, and the physical block actually accessed is given by the contents of the LUT entry thus indexed. This method works well when the size of a block is large, and the size of the LUT consequently manageably small. This is the case for video servers, where block sizes of a megabyte are reasonable. It is less acceptable for data processing environments, in which a block size of 4096 bytes would be typical and the resultant LUT unacceptably large.

The above and further features of the invention are set forth with particularity in the appended claims and together with advantages thereof will become clearer from consideration of the following detailed description of an exemplary embodiment of the invention given with reference to the accompanying drawings.
Figure 1 is a schematic block diagram and a server, as already discussed herein;
Figure 2 is a schematic block diagram of a logical organisation of the server of Figure 1, as already discussed herein;
Figure 3 is a server flow diagram using the known technique of striping;
Figure 4 is a schematic block diagram of a server embodying the invention; and
Figure 5 is a server flow diagram in which the repeatable randomiser has been added to prevent repeated blocking.

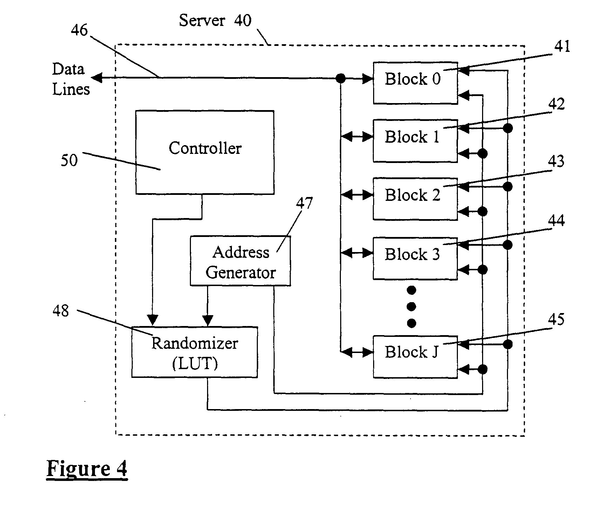

Referring now to Figure 4 of the accompanying drawings, the main elements of a server 40 embodying the invention are shown. The server 40 comprises a number of stores (not shown) logically divided into J blocks 41 to 45 from which data is read and to which data is written via data lines 46.

An address generator 47 is arranged to generate addresses identifying individual logical blocks 41 to 45 and individual locations within those blocks at which data is stored. The component of the output address pertaining to the block addresses (e.g. the MSBs of the output address) is input to a randomiser 48. The randomiser 48 may be implemented for example in the form of a look-up-table or a small processor (not shown) configured to calculate from the input address another address on a pseudo-random basis.

The randomiser may comprise a look-up table which comprises entries in random order, so that each entry once set up, is always the same and, therefore, repeatable. Thus, it will be appreciated that in a system according to this invention, the system in effect generates diversity which the server users are failing to generate.

Thus, in the case of a video server, it is apparent that whichever clip(s) the users may request of the server, they will not normally access the same storage units more than a few times in a row and the more users there are, the more likely they are to diverge.

Scattering the data randomly across the available storage effectively optimises the worst case at the expense of the best case. It is normally true that storage units such as disks can read adjacent blocks more efficiently than non-contiguous ones. By randomising the data, the possibility for this efficiently to be exploited is removed. This, therefore, is the price paid to ensure that the system cannot be trapped by a worst case. This is an appropriate trade-off for a video server, for which the improved performance in the best case cannot be exploited (a frame cannot be played out until it is needed) and for which the worst possible case is critical to the system performing its function.

A simple implementation of the Repeatable Randomiser is a Look Up Table (LUT). Without the LUT, a server offers H blocks of storage, numbered 0 to H-1 and scattered evenly across the available storage units. The LUT consists of H entries, each containing a number in the range 0 to H-1, but with those numbers randomly scattered. When a user requests access to a block of storage, the logical block number presented by the user is used an index to the LUT, and the physical block actually accessed is given by the contents of the LUT entry thus indexed. This method works well when the size of a block is large, and the size of the LUT consequently manageably small. This is the case for video servers, where block sizes of a megabyte are reasonable. It is less acceptable for data processing environments, in which a block size of 4096 bytes would be typical and the resultant LUT unacceptably large.

Referring now to Figure 5, the randomiser has been inserted into the flow between the Clips 1 and 2 and the Storage Units 3. For comparability, it again chances that blocks M and N fall upon the same storage unit, with the same delay as before. However, it is very unlikely that blocks M+1 and N+1 will also fall on the same storage unit, because they will both be chosen at random. The delay is, therefore, unlikely to be repeated a second time, and even less likely to be repeated a third time, and so on. Thus, in Figure 5, the two clips will rarely require access to the same storage unit at the same time, which is a marked contrast to the Figure 3 arrangement where one clip will always be blocked behind the other.

The randomiser LUT may also be simply implemented using a pseudo-random number generator with a known seed. Pseudo-randomness is adequate for this purpose. This would save storing the LUT and allow multiple controllers (desirable for reliability reasons) to generate identical tables without the need for tables to be distributed. However, as will be seen below, there are reasons to have a central LUT as the randomiser.

It is desirable to have the ability to add storage units to a server, and occasionally to remove them. As explained above, proper functioning of the server demands that user data be scattered randomly across all available storage units. This will be true before further storage is added to the system, and must be made true of the expanded system before the extra capacity and bandwidth brought by expanding system can be exploited. If the additional space is simply appended to the top of the existing space, then all new clips will be recorded onto the newly added storage. This will destroy the balance of the system when these clips (probably the most popular) are accessed. Therefore, after physically adding a new storage unit to the system, some data must be copied off the existing storage units onto the new unit, thereby freeing space on the existing storage, before the expanded capacity can be made available to the user.

This expansion is effected by a controller 50 (see Figure 4) in the server 40 in the following manner. If the unexpanded store comprises H blocks, the original LUT will have H entries. If a further J blocks of new storage units are to be added that will result in a new lookup table of K entries, where K=H+J. Initially a new lookup table is built by copying the original look up table as the bottom entries of the new look up table and then adding at the top of the new look up table entries containing H, H+1, H+2 ... K-1.

The controller 50 then picks at random (using, for example, a pseudo-random number generator) J entries from the expanded look up table and assign them to newly added entries H to K-1 in the look up table. If the original entry that was picked by the controller 50 was in use (which, of course, entries referring to the newly added unit will not be), then the controller 50 must copy the data from its original position to the newly added unit. The controller 50 can then interchange the two entries to the LUT, knowing that the two blocks contain the same data. The write side of the copying, writing to blocks H to K-1, can be done sequentially, which will improve efficiency. While copying is in progress, the old LUT can be used. When copying has completed, the new LUT is used for all accesses and the increased space made available for user data.

This updating process can be done for several additional units at once, or for only part of a unit at a time, in order to minimise the time before a part of the newly added space becomes available for use.

Special action has to be taken to handle writes to the storage blocks 41 to 45 while the copying process is performed. One strategy would be to write to both the old and new copies of the data. Another would be selectively to update the old look up table upon write, and to write to the new position only. Other strategies are possible, as will be appreciated by those possessed of the appropriate skills.

It is also possible to use the inverse process to remove a storage unit from the system, provided that there is enough unused space on the remaining storage units to copy over the data held on the unit being removed. However, there is one significant difference. If the size of the server is being reduced from K blocks to H blocks by removing units containing J blocks (not necessarily removing the most recently added unit), the user will have stored data in logical addresses in the range 0 to K-1, i.e. in the full range of the enlarged system. Though there may be enough free space to allow the removal of a storage unit, the logical addressing must remain in the range 0 to K-1 even when the number of accessible storage blocks has gone down to only H blocks. It is, therefore, necessary that the server have the concept of inaccessible blocks.

Thus, in order to reduce the number of storage blocks (by removal of one or more storage units), the controller 50 is arranged to search the look up table of the randomiser 48 in order to find how many blocks (X) on the unit to be moved are in use. The look up table is then searched for X blocks which (a) are on the storage units which are to remain and (b) are not in use. These entries are marked inaccessible in the LUT, as are those for all free blocks on the unit to be removed. The X blocks are then copied from the unit to be removed to the remaining entries and their LUT entries updated accordingly. When this process has completed, the freed unit may be removed. The server will now appear to have K blocks of which J are inaccessible (corresponding to the blocks on the unit that have been removed) , given a reduced capacity of H blocks, which is what would be expected.

Having thus described the invention by reference to a preferred embodiment it is to be well understood that the embodiment in question is exemplary only and that modifications and variations such as will occur to those possessed of appropriate knowledge and skills may be made without departure from the spirit and scope of the invention as set forth in the appended claims and equivalents thereof.

## Claims

1. A server for storing data of at least one data stream for simultaneous access by a plurality of different users, the server comprising:
at least one storage device providing a multiplicity of individually addressable storage locations;
an address generator for addressing storage locations in the at least one storage device, the address generator being arranged to generate block addresses which identify logical storage blocks, each comprising multiple storage locations and location addresses which identify individual ones of the storage locations within a logical storage block; and
an address randomiser, coupled to receive the block addresses generated by the address generator, for generating from the received block addresses corresponding pseudo-random block addresses which are output together with the location addresses to the at least one storage device for the writing of data of the data stream to and the reading of data of the data stream from the store in pseudo-random block order.

2. A server as claimed in claim 1, wherein the at least one storage device comprises a plurality of storage devices and the logical storage blocks are defined independently of the storage devices.

3. A server as claimed in claim 1 or 2, wherein the address generator is arranged to generate addresses in sequential order corresponding to the order of data in the at least one data stream.

4. A server as claimed in claim 1, 2 or 3, wherein the address randomiser comprises a look-up table.

5. A server as claimed in claim 4, further comprising a controller for controlling the randomiser.

6. A server as claimed in claim 5, wherein the controller is arranged to contact the randomiser by varying data in the look-up table.

7. A server as claimed in claim 6, wherein the controller is further arranged to respond to addition of at least one further storage device by creating new logical storage blocks in the further storage device, transferring selected data from selected existing logical storage blocks to selected new logical storage blocks, and varying the data in the look-up table to represent the new logical storage blocks and the transferring of selected data.

8. A server as claimed in claim 7, wherein the selecting of data and logical storage blocks is made based on random numbers generated by a random number generator.

9. A server as claimed in claim 6, wherein the controller is further arranged to respond during removal of at least one existing storage unit containing a number of logical storage blocks containing stored data by identifying the same number of empty remaining logical storage blocks among remaining storage units, effecting a transfer of data from the logical storage blocks of the storage unit being removed to the identified empty remaining logical storage blocks, and varying the data in the look-up table to represent the logical storage blocks in the remaining storage units and the transferring of the data to the identified remaining logical storage blocks.

10. A server as claimed in claim 9, wherein the empty remaining logical storage blocks are identified in part based on random numbers generated by a random number generator.

11. A server as claimed in claim 1, 2 or 3, wherein the address randomiser comprises a pseudo-random address generator.

12. A method for storing data of at least one data stream for simultaneous access by a plurality of different users, the method comprising:
providing a multiplicity of individually addressable storage locations in at least one storage device;
addressing storage locations in the at least one storage device by generating block addresses which identify logical storage blocks, each comprising multiple storage locations and location addresses which identify individual ones of the storage locations within a logical storage block;
generating from the received block addresses corresponding pseudo-random block addresses, outputting the same together with the location addresses to the at least one storage device; and
effecting one of writing data of the data stream to the store in pseudo-random block order and reading data of the data stream from the store in pseudo-random block order.

13. A method as claimed in claim 12, wherein the at least one storage device comprises a plurality of storage devices, and the method further comprises defining the logical storage blocks independently of the storage devices.

14. A method as claimed in claim 12 or 13, further comprising generating addresses in sequential order corresponding to the order of data in the at least one data stream.

15. A method as claimed in claim 12, 13 or 14, wherein random address data is stored in a look-up table and the pseudo random block addresses are generated by looking up random address data in the look up table.

16. A method as claimed in claim 15, further comprising varying data in the look-up table.

17. A method as claimed in claim 16, further comprising adding arranged to respond to addition of at least one further storage device;
creating new logical storage blocks in the further storage device;
transferring selected data from selected existing logical storage blocks to selected new logical storage blocks, and
varying the data in the look-up table to represent the new logical storage blocks and the transferring of selected data.

18. A method as claimed in claim 17, further comprising selecting data and logical storage blocks based on random numbers generated by a random number generator.

19. A method as claimed in claim 16, further comprising removing at least one existing storage unit containing a number of logical storage blocks containing stored data;
identifying the same number of empty remaining logical storage blocks among remaining storage units;
effecting a transfer of data from the logical storage blocks of the storage unit being removed to the identified empty remaining logical storage blocks; and
varying the data in the look-up table to represent the logical storage blocks in the remaining storage units and the transferring of the data to the identified remaining logical storage blocks.

20. A method as claimed in claim 19, further comprising identifying the empty remaining logical storage blocks in part based on random numbers generated by a random number generator.

21. A method as claimed in claim 12, 13 or 14, further comprising generating random addresses by way of a pseudo-random address generator.

22. A computer server system comprising a plurality of storage units which are arranged to be accessed for data retrieval purposes by a plurality of users, wherein user data is scattered in blocks distributed randomly and repeatably across available storage.

23. A computer server system as claimed in claim 22, wherein the randomiser comprises a look-up table containing entries arranged in random order.

24. A computer server system as claimed in claim 22 or 23, wherein data read for a first user is copied to a second and further uses so that a second or subsequent user has no need to access the server in order to refetch this data from a storage unit.

25. A computer server system as claimed in any of claims 21 to 24, wherein facilities are provided to add extra storage units and to redistribute data randomly across the totality of storage units.

26. A computer server system as claimed in any of claims 21 to 25, wherein facilities are provided to redistribute data randomly from one or more storage units which are to be removed, onto units which are not to be removed, and subsequently to remove the said storage units to be removed.

27. A computer server system substantially as hereinbefore described with reference to the accompanying drawings.
